Europäisches Patentamt

European Patent Office

Office européen des brevets

(19)

(11) Veröffentlichungsnummer: **0 029 154**
**A1**

(12) # EUROPÄISCHE PATENTANMELDUNG

(21) Anmeldenummer: **80106743.0**

(22) Anmeldetag: **03.11.80**

(51) Int. Cl.³: **G 01 F 19/00**

(30) Priorität: **15.11.79 DE 2946075**

(43) Veröffentlichungstag der Anmeldung: **27.05.81**
**Patentblatt 81/21**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Anselmino, Claudio Esteban, Heidemannstrasse 127, D-5000 Koeln 30 (DE)**

(54) **Messbecher für pulverförmiges Material.**

(57) Der Meßlöffel (3) besteht aus einem konisch ausgebildeten Meßgerät (5) mit einem Stiel (6). Das kegel- oder pyramidenförmige Meßgerät (5) ist in die Ebene abgewickelt und bildet mit dem Stiel (6) eine Einheit. An dem oberen Rand des Meßgefäßes ist ein Schnappverschluß angebracht, der z. B. aus einer oder mehreren Einstecklaschen (13) und korrespondierenden Schlitzen (12) besteht, in die die Laschen (13) beim Zusammenfügen der Mantelfläche einrasten. Der Meßlöffel wird der Packung in der abgewickelten Form beigefügt. Bei Gebrauch wird der Kegel bzw. die Pyramide zum Meßgefäß aufgefaltet.

0029154

BAYER AKTIENGESELLSCHAFT          5090 Leverkusen, Bayerwerk
Zentralbereich                    K/bc/c
Patente, Marken und Lizenzen
                                  14. Nov. 1979


Meßbecher für pulverförmiges Material


Die Erfindung betrifft einen Meßlöffel für pulverförmiges, in Packungen abgefülltes Material mit einem
Stiel und einem konisch ausgebildeten Meßgefäß. Derartige Meßlöffel werden häufig den Packungen vom Hersteller beigefügt, um den Kunden das Abmessen einer
bestimmten Pulvermenge zu erleichtern. Bekannt sind
Meßlöffel, die aus kegelförmigen Hohlkörpern mit einem Stiel zum Anfassen bestehen. Da es sich hierbei
um einen Massenartikel handelt, werden solche Meßbecher oder Meßlöffel heute mit Hilfe der Spritzgußtechnik hergestellt. Der Meßlöffel liegt in der fertigen Packung oben auf dem pulverförmigen Gut. Zu
diesem Zweck muß die Packung einen entsprechenden
Hohlraum enthalten. Die Packung muß also von vornherein wesentlich größer ausgelegt werden, um zusätzlich den Meßlöffel darin unterzubringen. Der große
Volumenbedarf bedingt auch ein großes Transportvolumen der Fertigpackung, so daß höhere Versand- und
Lagerkosten entstehen. Bei einer automatischen Verpackungsstraße sind außerdem zusätzliche Maschinen
zum Einlegen des Meßlöffels in die Packung erforderlich. Dadurch wird die automatische Konfektionierung


Le A 20 025

0029154

erschwert und kostenaufwendig. Ein weiterer Nachteil besteht darin, daß der Meßlöffel häufig im pulverförmigen Produkt verschwindet und erst mühsam vom Kunden wieder herausgesucht werden muß.

Der Erfindung liegt daher die Aufgabe zugrunde, einen Meßlöffel als Beilage zu Packungen mit pulverförmigem Gut zu entwickeln, der ein möglichst geringes zusätzliches Volumen in der Packung beansprucht, beim Öffnen der Packung leicht zu finden ist und kostengünstig herzustellen ist.

Diese Aufgabe wird erfindungsgemäß dadurch gelöst, daß das Meßgefäß aus einem in die Ebene abgewickelten Kegel oder einer abgewickelten Pyramide besteht und der in derselben Ebene angeordnete Stiel einstückig mit der abgewickelten Mantelfläche des Kegels bzw. der Pyramide verbunden ist und die Mantelfläche an ihrer Verbindungslinie mit einem Schnappverschluß versehen ist.

Als Material wird vorzugsweise ein thermoplastischer Kunststoff benutzt. Die abgewickelte Mantelfläche wird dann einschließlich des Stieles aus einer thermoplastischen Kunststoffolie zugeschnitten. Um im Falle des pyramidenförmigen Meßbechers das Auffalten zu erleichtern, ist die Materialstärke längst der Pyramidenkanten z.B. durch Einritzen vermindert.

Der Schnappverschluß besteht zweckmäßig aus einer oder mehreren Einstecklaschen und damit korrespondierenden Schlitzen, in die die Laschen beim Zusammenfügen der Mantelfläche einrasten.

Ein weitere Verbesserung besteht darin, daß der Stiel durch eine in Längsrichtung eingeprägte Vertiefung versteift ist.

Der Meßlöffel wird der Packung in der abgewickelten Form beigefügt. Auf diese Weise ist der Volumenbedarf minimal. Daraus ergibt sich eine wesentliche Verringerung des Packungsvolumens. Die früher üblichen Hohlräume für die Aufnahme des Meßlöffels sind nicht mehr erforderlich. Da der Meßbecher in der abgewickelten Form ein ebenes Gebilde darstellt, kann er z.B. an der Innen- oder Außenseite der Packung leicht befestigt werden oder zwischen Innen- und Außenpackung eingefügt werden, so daß er nicht mit dem Produkt in Berührung kommt. Diese Vorkehrung ist bei toxischen Produkten, z.B. Pflanzenschutzmitteln, von besonderer Bedeutung.

Das Auffalten der Pyramide bzw. des Kegels, d.h. den "Zusammenbau" des Meßlöffels besorgt der Kunde selbst. Erfahrungsgemäß werden dafür nur wenige Sekunden benötigt ohne daß eine Anleitung erforderlich wäre.

Der Zuschnitt für den Meßbecher kann kostengünstig durch Stanzen oder Prägen, mit Hilfe der Spritzgußtechnik, oder evtl. auch durch Tiefziehen, hergestellt werden.

Im folgenden wird ein Ausführungsbeispiel der Erfindung anhand von Zeichnungen näher erläutert. Es zeigen:

Le A 20 025

Fig. 1 eine Faltpackung mit dem seitlich aufgeklebten Meßlöffel in abgewickelter Form,

Fig. 2 eine Seitenansicht der Faltpackung gem. Fig. 1

Fig. 3 den Zuschnitt eines pyramidenförmigen Meßbechers,

Fig. 4 eine Seitenansicht des aus dem Zuschnitt gemäß

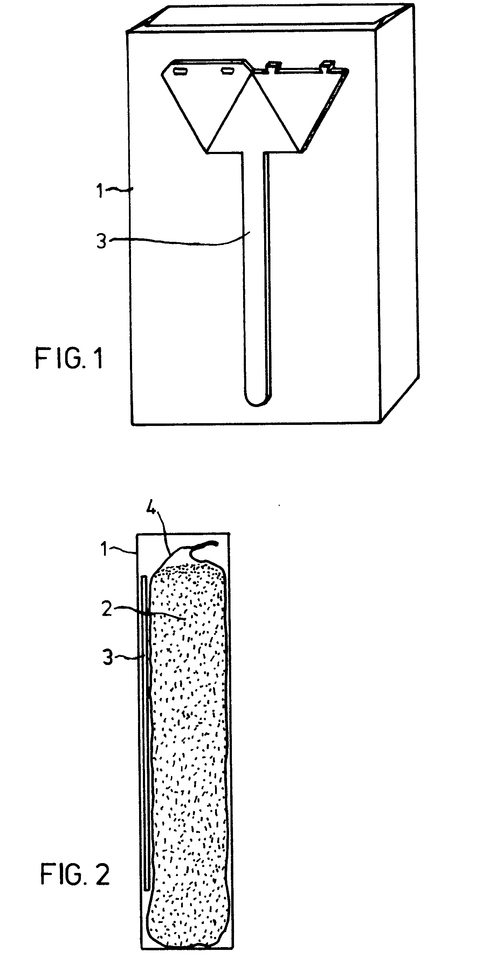

Fig. 2 gefalteten Meßbechers und

Fig. 5 eine Draufsicht des gefalteten Meßbechers.

Die quaderförmige Faltpackung 1 gemäß Fig. 1 enthält
einen Plastikbeutel 4, der mit einem pulverförmigen
Gut 2 gefüllt ist. Der Meßlöffel 3 ist entweder auf
einer Außenseite der Packung aufgeklebt (Fig. 1) oder
wird zwischen dem Beutel 4 und der Innenwand der Packung
eingeschoben (Fig. 2). Der Meßlöffel ist bei Gebrauch
der Packung sofort griffbereit. Er braucht vom Kunden
nur noch aufgefaltet zu werden.

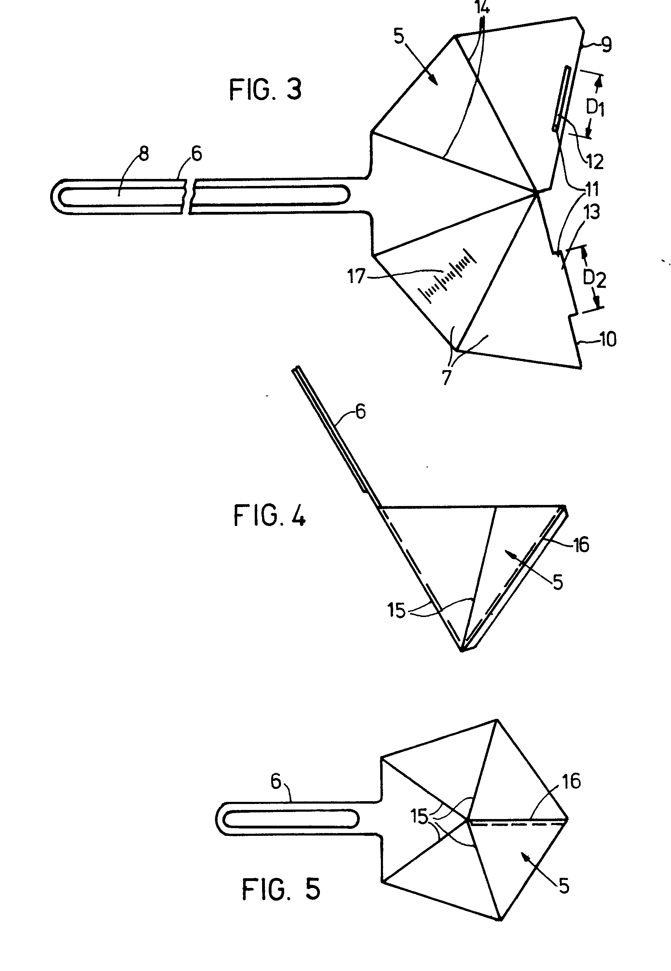

Die konstruktiven Details des Meßlöffels sind aus den
Figuren 3 bis Fig. 5 ersichtlich. Das Meßgefäß besteht hier aus einer 5-seitigen Pyramide 5, die in
Fig. 3 abgewickelt ist und gemäß Fig. 4 und Fig. 5
aufgefaltet ist. Als Material für den Zuschnitt gemäß
Fig. 3 wird eine 1 bis 2 mm starke Kunststoffolie,
z.B. Polypropylen, PVC, Polycarbonat, verwendet. Auch
Pappe ist als Ausgangsmaterial geeignet. Der Stiel
6 ist einstückig mit einer Pyramidenfläche 7 verbunden. Er kann jedoch auch längs einer Pyramidenkante
angebracht sein. Dies hat den Vorteil, daß das Meßgefäß längs dieser Kante versteift wird. Ebenfalls
aus Gründen der Versteifung ist in den Stiel 6 eine
rillenförmige Vertiefung 8 eingeprägt.

An den beim Auffalten des Meßgefäßes aneinander angrenzenden Kanten 9 und 10 (Verbindungslinie der abgewickelten Mantelfläche) ist ein Schnappverschluß 11 angebracht. Er besteht hier aus einem parallel zur Kante 9 verlaufendem Schlitz 12 und einer an der Kante 10 angebrachten Lasche 13. Beim Auffalten der Pyramide werden die Kanten 9 und 10 zusammengefügt und die Lasche 13 rastet in den Schlitz 12 ein. Um zu verhindern, daß sich die Einstecklasche 13 leicht aus dem Schlitz 12 löst, hat die Lasche 13 eine trapezförmige Gestalt, wobei die längere Seite $D_2$ der trapezförmigen Lasche etwas größer ist als die Länge $D_1$ des Schlitzes 12. Anstelle einer einzigen Lasche können selbstverständlich mehrere Laschen 13 und Einstecköffnungen 12 vorgesehen werden. Die innerhalb der Abwicklung liegenden Faltkanten sind mit 14 bezeichnet. Sie bilden in Fig. 4 und Fig. 5 die vier Pyramidenkanten 15, während die fünfte Pyramidenkante 16, wie oben beschrieben, durch Zusammenfügen der Randkanten 9 und 10 gebildet wird. Um das Falten zu erleichtern, ist die Materialstärke im Bereich der Faltkanten 14 durch Einritzen oder Einprägen vermindert. Auf eine der Pyramidenflächen sind Volumenmeßstriche 17 eingeprägt oder aufgedruckt.

Das Meßgefäß kann auch kegelförmig ausgebildet sein. Der Zuschnitt für das Meßgefäß ist in diesem Fall sektorförmig.

0029154

Patentansprüche

1) Meßlöffel für pulverförmiges oder granulatförmiges, in Packungen abgefülltes Material mit einem Stiel und einem konisch ausgebildeten Meßgefäß, dadurch gekennzeichnet, daß das Meßgefäß (5) aus einem (einer) in die Ebene abgewickelten Kegel oder Pyramide besteht und der in der selben Ebene angeordnete Stiel (6) einstückig mit der abgewickelten Mantelfläche verbunden ist und daß die Mantelfläche an ihrer Verbindungslinie (9,10) mit einem Schnappverschluß (11) versehen ist.

2) Meßlöffel nach Anspruch 1, dadurch gekennzeichnet, daß die abgewickelte Mantelfläche einschließlich des Stieles (6) aus einem thermoplastischen Kunststoff oder aus Hartpappe hergestellt ist.

3) Meßlöffel nach Anspruch 1 bis 2, dadurch gekennzeichnet, daß die Materialstärke der abgewickelten Mantelfläche längs der Faltkanten (14) vermindert ist.

4) Meßlöffel nach Anspruch 1 bis 3, dadurch gekennzeichnet, daß der Schnappverschluß (11) aus einer oder mehreren Einstecklaschen (13) und korrespondierenden Schlitzen (12) besteht, in die die Laschen (13) beim Zusammenfügen der Mantelfläche einrasten.

5) Meßlöffel nach Anspruch 1 bis 4, dadurch gekennzeichnet, daß der Stiel (6) durch eine in Längsrichtung eingeprägte Vertiefung (8) versteift ist.

Le A 20 025

FIG.1

FIG. 2

FIG. 3

FIG. 4

FIG. 5

Europäisches
Patentamt

**EUROPÄISCHER RECHERCHENBERICHT**

| Kategorie | Kennzeichnung des Dokuments mit Angabe, soweit erforderlich, der maßgeblichen Teile | betrifft Anspruch |
|---|---|---|
| | <u>US - A - 1 931 213</u> (D.B. WHEELER) <br> * Seite 1, Zeilen 1-42; 55-119; Seite 2, Zeilen 50-89; Figuren 1-5 * <br><br> -- | 1-3 |
| | <u>US - A - 2 039 830</u> (F.H. OWENS) <br> * Seite 2, Zeilen 32-38; Figuren 6,7 * <br><br> -- | 2-4 |
| | <u>DE - U - 1 866 261</u> (GUSTAG STABERNACK GmbH) <br> * Seite 3, Zeilen 8-21; Figuren 1-3 * <br><br> -- | 2-4 |
| | <u>GB - A - 24 289 /1911</u> (C.H.PARSONS) <br> * Seite 2, Zeilen 3-6; 38-51; Figuren 4-7 * <br><br> -- | 2-4 |
| | <u>US - A - 2 570 521</u> (F.R. CHESTER) <br> * Spalte 2, Zeilen 3-11; Figuren 1,2 * <br><br> -- | 5 |
| A | <u>DE - A - 2 142 279</u> (M. LAUKEL) <br> * Seite 2, Zeile 10 bis Seite 4, Zeile 16; Figuren 1-3 * <br><br> -- | 1 |
| A | <u>US - A - 2 770 403</u> (D.L. ECKLEY) <br> * Spalte 2, Zeilen 21-36; Figuren 1-3 * <br><br> -- ./. | 1,2 |

**EINSCHLÄGIGE DOKUMENTE**

**KLASSIFIKATION DER ANMELDUNG (Int. Cl.)**

G 01 F 19/00

**RECHERCHIERTE SACHGEBIETE (Int. Cl.³)**

G 01 F 19/00
B 65 D 5/00
5/76
A 61 J 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-02-1981 | NENTWICH |

EPA form 1503.1 06.78

Europäisches
Patentamt

**EUROPÄISCHER RECHERCHENBERICHT**

0029154

Nummer der Anmeldung

EP 80 10 6743

-2-

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | <u>DE - A - 2 705 502</u> (KAO SOAP CO. LTD.) <br><br> * Seite 3, Zeile 3 bis Seite 4, Zeile 18; Seite 8, Zeile 5 bis Seite 9, letzte Zeile; Figuren 5-10 * <br><br> ----- | 1-4 | |
| | | | **RECHERCHIERTE SACHGEBIETE** (Int. Cl.³) |